# FASCICULE DE BREVET EUROPEEN

(11) **EP 2 815 547 B1**
(45) Date de publication et mention de la délivrance du brevet: **27.11.2019**
(21) Numéro de dépôt: 13710451.9
(22) Date de dépôt: 12.02.2013
(51) Int. Cl.: H04L 12/911

(54) **TECHNIQUE DE TRAITEMENT D'UN FLUX DE DONNEES ENTRE UN SERVEUR ET UNE ENTITE CLIENTE**
VERFAHREN ZUR VERARBEITUNG EINES DATENSTROMS ZWISCHEN EINEM SERVER UND EINER CLIENT-EINHEIT
TECHNIQUE FOR PROCESSING A DATA STREAM BETWEEN A SERVER AND A CLIENT ENTITY

(30) Priorité: 16.02.2012 FR 1251413
(43) Date de publication de la demande: 24.12.2014
(73) Titulaire: Orange, 75015 Paris (FR)
(72) Inventeur: HAMCHAOUI, Isabelle, F-22730 Tregastel (FR); JOBERT, Sébastien, F-22140 Begard (FR); ADAM, Yann, F-22220 Treguier (FR)
(86) Numéro de dépôt international: PCT/FR2013/050285
(87) Numéro de publication internationale: WO 2013/121141

(56) Documents cités:
- EP-A1- 1 873 977
- WO-A1-2009/055248
- US-A1- 2005 047 340

## Description

L'invention concerne une technique de traitement d'un flux de données entre un serveur et une entité cliente. Plus précisément, cette technique de traitement permet de mettre en œuvre une fonction de contrôle d'admission d'un flux de données dans un réseau de communication par paquets.

Une fonction de contrôle d'admission peut être mise en œuvre lors d'un établissement ou d'une ouverture d'une session de service. Une session de service permet à un serveur de données de fournir à une entité cliente des données pouvant représenter un contenu numérique par exemple des sons ou des images. La session de service peut être acceptée ou rejetée.

Cette fonction de contrôle d'admission permet de protéger la qualité de service de la transmission des données de sessions déjà établies en rejetant si nécessaire de nouvelles sessions.

Ainsi, la fonction de contrôle d'admission doit s'assurer, pour toute nouvelle demande d'ouverture de session de la part d'une entité cliente, que les ressources nécessaires à cette nouvelle session sont disponibles dans le réseau pour accepter la demande en un temps acceptable pour l'utilisateur de l'entité cliente. Ce temps dépend du service concerné.

Cette fonction de contrôle d'admission est relativement simple à mettre en œuvre dans les réseaux de communication fonctionnant en mode connecté grâce à un échange de signalisation précédant toute ouverture de session et permettant de vérifier si les ressources nécessaires sont disponibles et de les réserver. Cette fonction de contrôle d'admission est dite explicite, car la requête de signalisation indique clairement la quantité de ressources à réserver, par exemple, le débit. Toutefois, on constate pour ce type de réseaux une sous utilisation des ressources.

Il existe également des fonctions de contrôle d'admission dite implicites, ne nécessitant pas un échange de signalisation indiquant la quantité de ressources à réserver.

A cet effet, la demande de brevet publiée sous le numéro WO2011/001096 propose une technique de commande de l'ouverture de sessions de communications entre un serveur et des terminaux client reliés par un réseau de communication par paquets, dans lequel, sur réception d'une information de congestion d'une première session de communication établie entre un premier terminal client et le serveur, un dispositif de commande inhibe l'ouverture d'une seconde session de communication avec un second terminal client. Une information de congestion indique l'existence d'une congestion. Il s'agit par exemple de la présence de l'information CE «Congestion Experienced » véhiculée par le champ ECN de l'entête d'un paquet IP.

Il est ainsi prévu de détecter la présence d'un champ d'information contenant éventuellement une information de congestion relative à une congestion affectant la première session et en fonction de la valeur du champ d'information détecté, de commander (c'est-à-dire accepter ou refuser) l'ouverture de la seconde session de communication avec le second terminal client. Toutefois, cette méthode permet uniquement de ne pas amplifier un phénomène de congestion déjà identifié en n'admettant pas de nouvelles sessions de service. Elle ne permet pas d'obtenir tous les effets d'un contrôle d'admission explicite, comme la garantie pour les sessions de service admises d'une qualité de service conforme à celle requise.

La demande de brevet EP 1 873 977 (ALCATEL LUCENT) divulgue pour sa part un système de contrôle d'admission de flux visant à autoriser systématiquement et immédiatement tout nouveau flux en lui associant initialement un niveau de priorité inférieur, quitte à lui associer par la suite un niveau de priorité supérieur si le niveau de congestion mesuré pendant un certain temps consécutivement à l'admission d'un tel nouveau flux reste faible.

La demande de brevet US 2005/047340 (BABIARZ JOZEF et AL) divulgue pour sa part un procédé de contrôle d'admission pour établir une communication VoIP entre deux terminaux, reposant intégralement sur la constatation de l'état de charge des retours du chemin emprunté par cette communication pour un chemin de qualité de service donné.

Enfin, la demande internationale WO 2009/055248 (MOTOROLA) divulgue un procédé pour admettre un nouveau flux d'un nœud source vers un nœud destination, dans lequel un nœud recevant les paquets de ce nouveau flux vérifie si les conditions de QoS demandées pour les flux existants peuvent être maintenues une fois ce nouveau flux admis et, si ce n'est pas le cas, transmet un indicateur (« infringement indicator ») de notification d'une telle situation aux nœuds situés dans son voisinage, lesquels peuvent alors décider d'arrêter éventuellement le traitement des paquets du nouveau flux ou au contraire continuer ce traitement, en fonction de la réception de cet indicateur.

Un des buts de l'invention est de remédier à des insuffisances/inconvénients de l'état de la technique et/ou d'y apporter des améliorations.

Selon un premier aspect, l'invention a pour objet un procédé de traitement d'un flux de données entre un serveur et une entité cliente dans un réseau de communication par paquets. Le flux de données est composé de paquets acheminés par un dispositif de traitement. Le procédé comprend les phases suivantes mises en œuvre par le dispositif de traitement :
- une phase d'observation dudit flux de données, déclenchée sur réception d'un premier paquet du flux, au cours de laquelle les paquets dudit flux de données échangés entre le serveur et l'entité cliente et consécutifs au premier paquet sont transmis ;
- une phase de rejet dudit flux de données, déclenchée sur détection, à partir d'au moins un paquet de données dudit flux de données, d'une congestion associée audit flux de données, au cours de laquelle des paquets du flux de données échangés entre le serveur et l'entité cliente et reçus après détection de la congestion ne sont pas transmis.

Ainsi, dans la première phase dite d'observation, chaque paquet de ce flux de données sous observation est transmis. Suite à l'admission temporaire de ce nouveau flux sur le réseau, une congestion peut apparaître au niveau d'un équipement contribuant à l'acheminement des paquets. La congestion est ainsi provoquée par l'admission temporaire du flux de données et est susceptible de perturber la transmission d'autres flux de données déjà admis. Dans ce cas, par la mise en œuvre du procédé de traitement, le flux de données sous observation est alors refusé ou rejeté. La décision de rejeter le flux de données est alors prise en fonction de l'impact effectif et constaté de l'admission du flux de données dans le réseau de communication par paquets. Ainsi, la qualité de service des flux de données déjà admis n'est susceptible d'être perturbée que temporairement pendant la phase d'observation du nouveau flux de données. Il est ici rappelé que pour les méthodes connues de l'état de la technique, en l'absence de congestion préalable, le nouveau flux de données est admis et son admission est susceptible de provoquer une congestion l'affectant ainsi qu'une pluralité de flux de données déjà admis.

Il est ici souligné que pendant la phase d'observation correspondant à l'admission temporaire du flux de données, des paquets transmis par le serveur vont être reçus par l'entité cliente. En cas de rejet de ce flux par le dispositif de traitement à l'issue de la période d'observation, ce flux de données est interrompu. Toutefois, il n'y a pas de détérioration du ressenti de l'utilisateur de l'entité cliente par rapport à la situation où le flux de données est admis et ensuite dégradé en fonction de mauvaises conditions de fonctionnement. Pour un service de distribution de contenu numérique, il est également courant qu'une file d'attente ou mémoire tampon de l'entité cliente mémorise des paquets avant restitution, correspondant par exemple à une durée de quelques secondes de restitution. Pour un tel service, lorsque la durée maximale de la phase d'observation est choisie de façon cohérente avec une durée moyenne de ces files d'attente, la restitution du contenu numérique ne va pas commencer et ainsi l'utilisateur ne va pas pouvoir détecter que le flux de données a été temporairement admis. Il est ici souligné que la durée maximale de la phase d'observation peut être définie en unités de temps ou bien en nombre de paquets transmis dans cette phase d'observation.

Les différents modes ou caractéristiques de réalisation mentionnés ci-après peuvent être ajoutés indépendamment ou en combinaison les uns avec les autres, aux étapes du procédé de traitement tel défini précédemment.

Selon une caractéristique particulière, en l'absence de détection d'une congestion associée audit flux de données pendant la phase d'observation, le flux de données est accepté.

Selon une caractéristique particulière, la congestion associée audit flux de données est détectée par une réception d'au moins une information de congestion transportée dans un des paquets du flux de données reçus dans la phase d'observation.

On utilise par exemple dans ce cadre une technique d'identification d'une congestion existante, telle que le marquage du champ ECN dans l'entête des paquets IP.

On utilise ainsi une fonction existante du réseau de communication par paquets ce qui permet de profiter des avantages présentés ci-dessus de manière simple et dans le cadre de systèmes existants.

Selon une autre caractéristique particulière, au moins un autre flux de données étant acheminé par le dispositif de traitement, la phase de rejet est également déclenchée sur détection au cours de la phase d'observation d'une congestion associée audit autre flux de données.

Les informations relatives à la congestion de l'autre flux de données complètent ainsi l'observation des effets d'une admission temporaire du flux de données.

Selon encore une autre caractéristique particulière, l'information de congestion est portée par un paquet reçu du serveur et à destination de l'entité cliente.

L'information de congestion est par exemple une information de congestion de la transmission des paquets en amont du serveur.

Selon encore une autre caractéristique particulière, l'information de congestion est portée par un paquet d'acquittement émis par l'entité cliente à destination du serveur.

L'information de congestion est par exemple une information de congestion de la transmission des paquets du serveur à l'entité cliente, reçue et réémise par l'entité cliente dans le sens inverse et par conséquent reçue par le serveur en provenance de l'entité cliente. Il s'agit ainsi d'une information de congestion de la transmission des paquets en aval du serveur.

L'information de congestion peut être contenue dans un entête d'un paquet de données reçu de l'entité cliente par le serveur, par exemple dans un message de réponse émis par l'entité cliente vers le serveur, tel qu'un accusé de réception ou un rapport de communication en provenance de l'entité cliente en réponse aux données délivrées à l'entité cliente par le serveur.

Selon encore une autre caractéristique particulière, la phase d'observation est mise en œuvre pour des flux de données de classe de service inférieure à une valeur prédéterminée.

Il est ainsi possible de mettre en œuvre le procédé de traitement uniquement sur des flux de données de priorité faible, tout en admettant systématiquement les flux de données de priorité plus élevée.

Selon un deuxième aspect, l'invention concerne en outre un dispositif de traitement d'un flux de données entre un serveur et une entité cliente dans un réseau de communication par paquets, le flux de données étant composé de paquets, comprenant :
- des moyens de transmission, agencés pour transmettre un paquet d'un flux de données reçu ;
- des moyens de détection d'une congestion, agencés pour détecter, à partir d'au moins un paquet de données d'un flux de données, une congestion associée audit flux de données ;
- des moyens d'identification, agencés pour détecter un premier paquet d'un flux de données et pour déclencher les moyens de détection d'une congestion ;
- des moyens de commande, agencés pour inhiber la transmission des paquets ultérieurs dudit flux de données par les moyens de transmission, sur détection d'une congestion associée audit flux de données par les moyens de détection d'une congestion.

Selon un troisième aspect, l'invention concerne également un équipement nœud dans un réseau de communication par paquets, agencé pour acheminer des paquets échangés entre un serveur et une entité cliente, et comprenant en outre un dispositif de traitement selon le deuxième aspect.

Selon un quatrième aspect, l'invention concerne un programme pour un dispositif de traitement, comprenant des instructions de code de programme destinées à commander l'exécution des étapes du procédé précédemment décrit, lorsque ledit programme est exécuté par ledit dispositif et un support d'enregistrement lisible par un dispositif de traitement sur lequel est enregistré un programme pour un dispositif.

D'autres caractéristiques et avantages de l'invention apparaîtront plus clairement à la lecture de la description suivante d'un mode de réalisation particulier de l'invention, faite en référence aux dessins annexés dans lesquels :
- la figure 1 représente un dispositif de traitement dans son environnement ;
- les figures 2a, 2b et 2c représentent des étapes du procédé de traitement selon un mode particulier de réalisation ;
- la figure 3 représente une table de flux de données dans un mode particulier de réalisation ;
- la figure 4 représente un dispositif de traitement selon un mode particulier de réalisation.

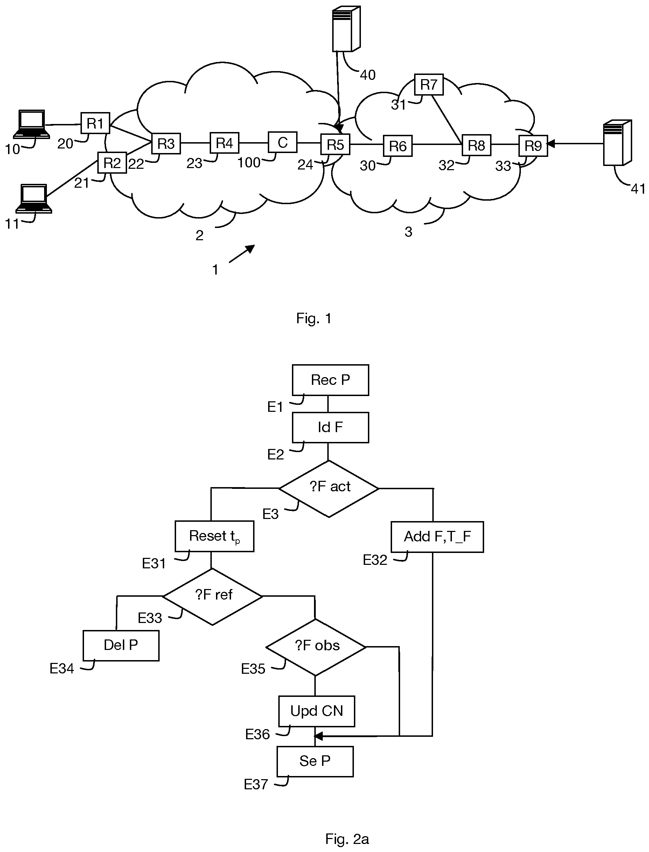

La **figure 1** représente un dispositif de traitement 100 dans un réseau de communication par paquets 1.

Le réseau de communication par paquets 1 permet à des entités clientes 10, 11 d'échanger des flux de données avec des serveurs 40, 41 par l'intermédiaire de différents sous-réseaux de communication 2, 3. A titre d'exemple illustratif, ces serveurs 40, 41 sont des serveurs de distribution de contenus numériques. Le flux de données correspond alors à un contenu numérique dans un sens de transmission, du serveur de distribution 40, 41 vers les entités clientes 10, 11, et dans le sens inverse, à des acquittements relatifs à la distribution du contenu numérique. On note qu'un flux de données correspond à un échange de paquets entre deux machines d'un réseau de communication par paquets dont les paquets ont des caractéristiques communes notamment ici des caractéristiques communes d'origine, de destination et de service. Par la suite, ces caractéristiques sont appelées caractéristiques de flux. Un identifiant du flux de données est construit à l'aide de ces caractéristiques communes. Par la suite, on représente ces caractéristiques communes sous la forme d'un quintuplé, comprenant une adresse source, une adresse de destination, un numéro de port source, un numéro de port destination et un protocole. Aucune limitation n'est attachée à la manière de construire un identifiant de flux à partir de ces caractéristiques communes.

Le flux de données est constitué de paquets de données de caractéristiques communes acheminés par le réseau de communication par paquets 1. Les entités clientes 10, 11 sont par exemple des ordinateurs, des télévisions connectées, des terminaux mobiles, connectées directement ou bien par l'intermédiaire de passerelles résidentielles, de points d'entrée à des réseaux d'entreprise.

Le sous-réseau de communication 2 correspond par exemple à un réseau d'accès et comprend une pluralité d'équipements nœuds R1-R5, 20-24, agencés pour acheminer les paquets de données constituant les flux de données. Un équipement nœud 20-24 correspond par exemple à un routeur, à un équipement DSLAM, pour « Digital Subscriber Line Access Multiplexer », à un équipement MSAN pour « Multi-Service Access Node » dans une technologie ADSL (pour "Asymmetric Digital Subscriber Line") ou optique FTTH, pour « Fiber To The Home »,...

L'entité cliente 10 accède au sous-réseau d'accès 2 par l'intermédiaire de l'équipement nœud 20. L'entité cliente 11 accède au sous-réseau d'accès 2 par l'intermédiaire de l'équipement nœud 21. Les deux équipements nœuds 20, 21 sont quant à eux reliés à l'équipement nœud 24 par l'intermédiaire successivement de l'équipement nœud 22 et de l'équipement nœud 23.

Sur la figure 1, le dispositif de traitement 100 est situé dans le-réseau d'accès 2 en sortie de l'équipement 23, par exemple sur le lien le reliant à l'équipement nœud 24. Le dispositif de traitement 100 reçoit ainsi l'ensemble des paquets échangés entre ces deux équipements nœuds 23, 24. Le dispositif de traitement 100 peut également être intégré dans un des équipements nœuds.

L'équipement nœud 24 correspond à un point d'interconnexion avec le deuxième sous-réseau de communication 3. Ce point d'interconnexion est également connu sous le nom de point de présence (POP). Le deuxième sous-réseau de communication 3 correspond à un réseau de transit et comprend des équipements nœuds R6-R9 30-33. Les paquets de données échangés entre l'équipement nœud 24 et le serveur de distribution 41 sont acheminés successivement par les équipements nœuds 30, 32 et 33.

On souligne ici que la figure 1 est uniquement donnée à titre illustratif et qu'aucune limitation n'est attachée à cette représentation simplifiée, notamment en terme de nombre d'équipements nœuds, d'organisation du réseau,...

Les sous-réseaux de communication sont des réseaux mettant en œuvre le protocole Internet.

Les équipements nœuds jouent le rôle de routeurs dans le réseau 1, c'est-à-dire qu'ils sont en charge d'acheminer des paquets dans un plan, dit plan de transfert. Par la suite, ces équipements nœuds sont appelés simplement nœuds. Une route, également appelée chemin, permet un acheminement de paquets d'un nœud source à destination d'un nœud destination par l'intermédiaire d'autres nœuds le cas échéant.

Lorsqu'une congestion se produit au niveau d'un nœud d'une route, par exemple au niveau d'une file d'attente destinée à mémoriser les paquets en sortie du nœud avant transmission vers le prochain nœud sur la route, les paquets sont marqués par le nœud avant transmission à l'aide d'un champ d'information ECN, pour « Explicit Congestion Notification » présent dans l'entête du paquet IP. Les paquets sont ainsi marqués en positionnant le champ d'information ECN à la valeur « 11 », ce qui correspond à l'information « Congestion Experienced ». A titre d'exemple illustratif, lorsque le nœud 24 se trouve congestionné pour l'acheminement des paquets reçus en provenance du nœud 30 et à destination de l'entité cliente 10, par l'intermédiaire des nœuds 23, 22, 20, ces paquets sont marqués en sortie du nœud 24 et le dispositif de traitement 100 les reçoit ainsi marqués.

Les contenus numériques sont par exemple distribués à l'aide du protocole TCP, pour « Transport Control Protocol ». Un flux de données correspond alors à une connexion TCP.

Les entités clientes acquittent, conformément au protocole TCP, les paquets de données reçus en émettant un ou plusieurs accusés de réception ACK.

On souligne ici que la communication des paquets de données du serveur de distribution à l'entité cliente peut être gérée par d'autres protocoles que le protocole TCP. À titre d'exemple, le protocole UDP/RTP, pour « User Datagram Protocol/Real Time Transport Protocol » peut être utilisé, notamment pour des applications télévisuelles de type IPTV (Télévision sur IP). Dans ce cas, les entités clientes émettent des rapports RTCP, pour « RTP Control Protocol » en retour et l'information ECN peut-être codée dans l'entête des paquets de données qui transportent ces rapports RTCP.

Dans un mode de réalisation, l'entité cliente recevant un paquet marqué effectue la recopie du champ d'information ECN dans le paquet porteur de l'accusé de réception ACK plus précisément dans l'entête IP du paquet porteur de l'accusé de réception ACK. Ainsi si la congestion se produit en aval du dispositif de traitement 100, le dispositif de traitement 100 est notifié de cette congestion par la réception d'un paquet marqué émis par l'entité cliente. Une telle méthode est décrite dans la demande de brevet publiée sous le numéro WO2010/046598.

Selon l'invention, un nouvel état est susceptible d'être associé à un flux de données dans le dispositif de traitement 100. Lorsqu'un premier paquet d'un nouveau flux de données est reçu, ce nouveau flux de données passe dans un état en cours d'observation ou « obs » associé à une phase d'observation au cours de laquelle les paquets du flux de données sous observation, échangés entre le serveur de distribution et l'entité cliente, et consécutifs au premier paquet sont transmis par le dispositif de traitement 100. Le nouveau flux de données est ainsi admis temporairement. Pendant cette phase d'observation, l'apparition d'une congestion associée au flux de données est surveillée. Lorsque cette congestion est détectée, le nouveau flux de données passe dans un état refusé ou « ref » associé à une phase de rejet, au cours de laquelle des paquets ultérieurs du flux de données rejeté, échangés entre le serveur de distribution et l'entité cliente, ne sont pas transmis. Lorsqu'à l'issue de la phase d'observation, aucune congestion n'a été détectée, le nouveau flux de données est admis définitivement et passe dans un état accepté ou « acc », dans lequel les paquets ultérieurs du flux de données accepté, échangés entre le serveur de distribution et l'entité cliente, sont transmis.

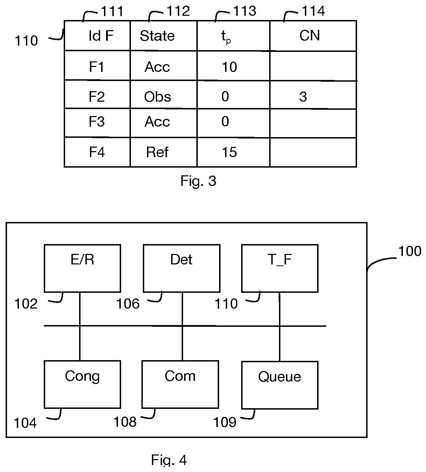

Dans un mode de réalisation, le dispositif de traitement 100 mémorise dans une table de flux 110, représentée à la **figure 3****,** un état du flux 112 en association avec un identifiant de flux 111. Sont également mémorisés en association avec l'identifiant du flux 111, une valeur 113, notée tₚ, représentative du temps écoulé depuis la réception du dernier paquet du flux et pour les flux en phase d'observation, une valeur 114 représentative d'une congestion associée au flux de données. A titre d'exemple illustratif en relation avec la figure 3, quatre flux de données sont actifs :
- le flux d'identifiant F1 est dans l'état accepté et dix unités de temps se sont écoulées depuis la réception du dernier paquet du flux ;
- le flux d'identifiant F2 est dans l'état en cours d'observation « obs », un paquet vient juste d'être reçu et la valeur représentative d'une congestion vaut trois ;
- le flux d'identifiant F3 est dans l'état accepté et un paquet vient juste d'être reçu ;
- le flux d'identifiant F4 est dans l'état refusé « ref » et quinze unités de temps se sont écoulées depuis la réception du dernier paquet du flux.

On effectue ainsi un contrôle d'admission d'une nouvelle session en admettant temporairement le nouveau flux et en observant l'effet de cette admission dans le réseau de communication par paquets 1. Ainsi il n'est pas nécessaire de mettre en œuvre un protocole de signalisation pour réserver des ressources, ni de recourir à un partitionnement des ressources du réseau. De plus, l'admission temporaire du nouveau flux de données pendant la phase d'observation permet d'observer l'effet de l'admission de celui-ci au niveau des équipements du réseau. Si son admission temporaire entraîne une congestion au niveau au moins d'un équipement de la route entre le serveur de distribution et l'entité cliente, il est préférable de rejeter le nouveau flux de données pour éviter de dégrader la qualité de service des flux de données déjà admis.

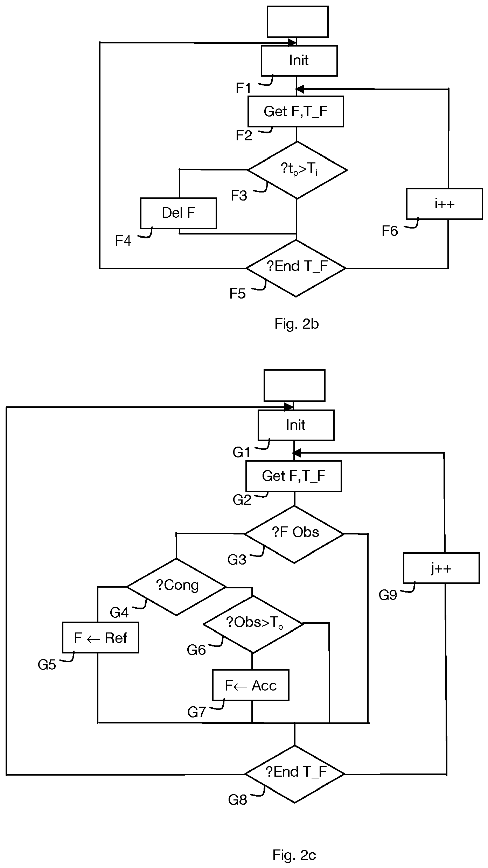

Les figures 2a, 2b et 2c représentent de façon schématique des étapes du procédé de traitement d'un flux de données dans un mode particulier de réalisation.

La **figure 2a** représente des étapes du procédé de traitement mis en œuvre par le dispositif de traitement 100 lors de la réception d'un paquet de données.

Dans une étape El de réception, le dispositif de traitement 100 reçoit le paquet de données et le mémorise dans une file d'attente en vue de sa transmission.

Dans une étape E2, le dispositif de traitement 100 détermine à partir du paquet de données un identifiant du flux de données auquel le paquet appartient. Dans un mode de réalisation particulier, l'identifiant du flux est déterminé par application d'une fonction de hachage au quintuplé formant les caractéristiques communes du flux de données. Ceci permet d'accélérer l'accès aux enregistrements de la table de flux 110.

Dans une étape E3, le dispositif de traitement 100 vérifie si le flux de données identifié est un nouveau flux. Plus précisément, le dispositif de traitement 100 consulte la table de flux 110 afin de vérifier si le flux de données identifié est déjà actif, c'est-à-dire si un enregistrement associé à l'identifiant du flux y est mémorisé. Si un tel enregistrement existe, le flux de données identifié n'est pas un nouveau flux de données. Si un tel enregistrement n'existe pas, le paquet de données reçu est le premier paquet du nouveau flux de données identifié.

Si le flux de données identifié n'est pas nouveau, c'est-à-dire si des paquets de données appartenant au flux de données identifié ont déjà été reçus, dans une étape E31, le dispositif de traitement 100 remet à zéro la valeur 113 représentative du temps écoulé tₚ depuis la réception d'un paquet du flux de données identifié et la mémorise dans la table de flux 110.

Dans une étape E33, le dispositif de traitement 100 vérifie si le flux de données identifié est un flux refusé, c'est-à-dire si son état est « ref ». Plus précisément, le dispositif de traitement 100 consulte la table de flux 110 afin d'obtenir l'état associé à l'identifiant du flux.

Si le flux de données est dans un état refusé ou « ref », c'est-à-dire qu'une phase de rejet des paquets est en cours, dans une étape E34, le paquet de données est supprimé de la file d'attente et n'est pas transmis.

Si le flux de données n'est pas dans l'état refusé, dans une étape E35, le dispositif de traitement 100 vérifie si le flux de données est dans un état en cours d'observation « obs ». Si tel est le cas, dans une étape E36, le dispositif de traitement 100 obtient à partir du paquet de données reçu une information relative à la congestion. Il est ici rappelé que cette congestion peut avoir eu lieu en amont du dispositif de traitement 100 pour un paquet en provenance du serveur de distribution ou bien en aval du dispositif de traitement 100, auquel cas l'information de congestion est portée par un paquet comprenant un acquittement transmis par l'entité cliente 10. Toujours dans cette étape E36, le dispositif de traitement 100 met à jour un compteur CN représentatif d'une congestion associée au flux de données identifié.

A titre d'exemple non limitatif, le compteur CN comptabilise directement le nombre de paquets reçus portant une information représentative d'une congestion. Toujours à titre d'exemple non limitatif, le compteur CN est augmenté d'un sur réception d'une information relative à une congestion et décrémenté d'une valeur prédéterminée inférieure à un lorsque le paquet reçu ne porte pas d'information relative à une congestion. Il est également possible de prendre en compte dans le compteur CN l'ancienneté de l'information représentative d'une congestion. Aucune limitation n'est attachée à la méthode utilisée pour déterminer ce compteur CN.

Puis, dans une étape E37 de transmission, le dispositif de traitement 100 transmet le paquet de données reçu vers sa destination.

De retour à l'étape E35, si l'état du flux de données n'est pas en cours d'observation, ce flux de données a été précédemment admis, son état étant accepté « acc ». Dans ce cas, le dispositif de traitement 100 met en œuvre directement l'étape E37 de transmission précédemment décrite.

Ceci termine la description des étapes mises en œuvre lorsque le flux de données est déjà actif.

De retour à l'étape E3, si le dispositif de traitement 100 a détecté que le flux de données identifié est un nouveau flux, c'est-à-dire que le paquet de données reçu appartient à un flux de données inactif, ce paquet de données étant alors un premier paquet du flux de données identifié, dans une étape E32, le dispositif de traitement 100 initialise le compteur de congestion CN et mémorise dans la table de flux 110 un état en cours d'observation « obs » et le compteur de congestion CN en association avec l'identifiant du flux de données. Ceci déclenche une phase d'observation du flux de données sur réception d'un premier paquet du flux. L'étape E37 de transmission du paquet de données est alors mise en œuvre. Ainsi, au cours de cette phase d'observation, les paquets du flux de données échangés entre le serveur et l'entité cliente et consécutifs au premier paquet sont transmis.

Le traitement du paquet de données reçu est alors terminé. On rappelle ici que dans la phase d'observation, les paquets reçus sont transmis et que dans la phase de rejet, consécutive à une détection d'une congestion associée au flux de données lors d'une phase d'observation, les paquets reçus ne sont pas transmis, c'est-à-dire détruits.

La **figure 2b** décrit des étapes du procédé de traitement mises en œuvre par le dispositif de traitement 100 de manière régulière, par exemple cycliquement. Ces étapes permettent de supprimer les flux de données inactifs de la table des flux 110. Un cycle correspond par exemple à une durée prédéterminée.

Dans une étape F1, le dispositif de traitement 100 initialise une variable i de parcours de la table des flux 110 à la valeur un.

Dans une étape F2, le dispositif de traitement 100 obtient l'enregistrement indexé par la variable de parcours de la table des flux i.

Dans une étape F3, le dispositif de traitement 100 vérifie si la valeur tₚ du temps écoulé depuis la réception du dernier paquet est supérieure à une valeur seuil Tᵢ. Si tel est le cas, c'est-à-dire si le flux de données est considéré comme inactif, dans une étape F4, le dispositif de traitement 100 supprime l'enregistrement de ce flux de données inactif de la table des flux 110.

Dans les deux cas, le dispositif de traitement 100 vérifie ensuite dans une étape F5 si la valeur i correspond au dernier enregistrement de la table de flux 110.

Si tel n'est pas le cas, le dispositif de traitement 100 incrémente la valeur i de parcours de la table d'un dans une étape F6 et met de nouveau en œuvre l'étape F2.

Dans le cas contraire, l'ensemble des enregistrements mémorisés dans la table des flux 110 a été traité et le cycle est terminé. Les flux de données inactifs ont été supprimés de la table de flux 110.

La **figure 2c** décrit des étapes du procédé de traitement mises en œuvre par le dispositif de traitement 100 de manière régulière, par exemple cycliquement. Ces étapes sont relatives à la gestion de l'état des flux.

Dans une étape G1, le dispositif de traitement 100 initialise une variable j de parcours de la table des flux 110 à la valeur un.

Dans une étape G2, le dispositif de traitement 100 obtient l'enregistrement indexé par la variable j de parcours de la table des flux.

Dans une étape G3, le dispositif de traitement 100 vérifie si l'état du flux mémorisé dans l'enregistrement obtenu prend la valeur « obs », c'est-à-dire si le flux de données est en cours d'observation.

Si tel est le cas, c'est-à-dire si le flux de données est en cours d'observation, dans une étape G4, le dispositif de traitement 100 vérifie si une congestion est associée au flux de données. Plus précisément dans ce mode de réalisation, le dispositif de traitement 100 vérifie si le compteur CN associé au flux de données est supérieur à une valeur seuil de congestion. Il est par exemple possible de choisir ce seuil à la valeur un, auquel cas l'état du flux de données est modifié de « en cours d'observation » à « rejeté » dès qu'un paquet de données du flux portant une information représentative d'une congestion est reçu. D'autres valeurs peuvent également être choisies en fonction de la méthode utilisée pour déterminer le compteur CN.

Lorsqu'une congestion associée au flux de données est détectée, dans une étape G5, le dispositif de traitement 100 modifie l'état du flux de données vers l'état «refusé » et mémorise dans la table des flux 110 ce nouvel état en association avec l'identifiant du flux. La modification de l'état « en cours d'observation» à « refusé » déclenche ainsi une phase de rejet du flux de données sur détection d'une congestion associée au flux de données. Au cours de cette phase de rejet, des paquets du flux de données échangés entre le serveur et l'entité cliente et reçus après détection de la congestion ne sont pas transmis.

Lorsqu'aucune congestion associée au flux de données n'a été détectée, dans une étape G6, le dispositif de traitement 100 vérifie si la durée de la phase d'observation est supérieure à une durée prédéterminée Tₒ. Dans ce cas, à l'étape G7, le dispositif de traitement 100 modifie l'état du flux de données identifié de « en cours d'observation » à « accepté » et mémorise cet état dans la table de flux 110 en association avec l'identifiant du flux.

Dans tous les cas, le procédé de traitement passe ensuite à la mise en œuvre d'une étape G8, décrite ultérieurement.

Lorsque la durée de la phase d'observation est inférieure à la durée prédéterminée Tₒ, la phase d'observation continue et aucune action sur l'état du flux n'est effectuée. Le procédé de traitement passe ensuite à l'étape G8.

Lorsqu'à l'étape G3, le dispositif de traitement 100 a détecté que l'état du flux mémorisé dans l'enregistrement obtenu ne prend pas la valeur « obs », le procédé de traitement passe directement à l'étape G8.

A l'étape G8, le dispositif de traitement 100 vérifie si la valeur j correspond au dernier enregistrement de la table de flux 110.

Si tel n'est pas le cas, le dispositif de traitement 100 incrémente la valeur j de parcours de la table d'un dans une étape G9 et met de nouveau en œuvre l'étape G2.

Dans le cas contraire, l'ensemble des enregistrements mémorisés dans la table des flux 110 a été traité et le cycle est terminé.

Dans le mode de réalisation tel que décrit, l'inactivité d'un flux de données est déterminée par l'absence de réception de paquets pendant une durée prédéterminée Tᵢ. Aucune limitation n'est attachée à la méthode de détection d'inactivité. Il est également possible de prendre en compte un message de contrôle transitant par le dispositif de traitement et indiquant la fin du flux de données pour détecter l'inactivité du flux de données.

Dans le mode de réalisation tel que décrit, la phase d'observation est limitée par une durée maximale Tₒ. Dans un autre mode de réalisation, la phase d'observation peut également être limitée en fonction du nombre de paquets du flux de données sous observation transmis.

Dans le mode de réalisation tel que décrit, un flux de données peut prendre quatre états : inactif, accepté, en cours d'observation, refusé. Il est possible d'adapter le procédé de traitement en fonction de machines d'état plus complexes, par exemple comprenant un plus grand nombre d'états possibles. A titre d'exemple illustratif, dans une variante de l'algorithme, après détection d'une congestion associée au flux de données, le flux de données reste en phase d'observation et les indicateurs de congestion sont comptabilisés jusqu'à la fin de la période d'observation. Une décision de rejet ou d'admission est prise en fonction de la persistance ou non de la congestion. Pour cette variante, des sous-états sont introduits pendant la phase d'observation, afin de refléter les différentes sous-étapes.

Dans le mode de réalisation décrit précédemment, le dispositif de traitement 100 prend uniquement en compte une congestion associée au flux de données sous observation. Dans une variante à ce mode de réalisation, le dispositif de traitement 100 prend également en compte une congestion associée à un autre flux de données. Cet autre flux de données a été préalablement admis temporairement ou définitivement par le dispositif de traitement 100 et est actif. A titre d'exemple illustratif cet autre flux de données est établi entre le serveur de distribution 41 et l'entité cliente 11. Une congestion associée à cet autre flux de données est détectée. Le dispositif de traitement 100 identifie, par exemple grâce à l'adresse IP de l'entité cliente 11, une zone où la congestion se produit. En fonction de cette zone identifiée, le dispositif de traitement 100 peut ainsi prendre en compte la congestion associée à cet autre flux de données pour décider d'admettre ou non le flux de données, notamment si la zone identifiée est commune aux deux flux de données.

Dans un autre mode de réalisation particulier, différentes classes de service sont définies. Dans ce cas, les informations de congestion portées par un paquet d'un flux de données indiquent une congestion pour l'acheminement des paquets de classe de service qui correspond à celle du flux de données et également ceux de classe de service de priorité inférieure. Ainsi, pour des classes de service définies de un à quatre, où la classe de service un correspond à la plus grande priorité, lorsque la classe de service quatre de faible priorité rencontre une congestion, cela ne déclenche pas l'introduction d'une information de congestion ECN pour des paquets de classes de service de priorité supérieure, par exemple d'un à trois.

Il est alors possible de mettre en œuvre le procédé de traitement tel que décrit précédemment pour un flux de données dont la classe de service est faible. Toujours à titre d'exemple illustratif, il est alors possible de mettre en œuvre le procédé de traitement tel que décrit précédemment pour les flux de données, de classe de service trois ou quatre. Ainsi, les flux prioritaires sont toujours admis par ce procédé de traitement ; les flux moins prioritaires sont susceptibles d'être rejetés en cas de congestion. Il est ici souligné qu'il est également possible de mettre en œuvre le procédé de traitement tel que décrit précédemment pour les classes de service prioritaires lorsque le volume de trafic dépasse un seuil prédéterminé.

Par ailleurs, il est également souligné que le procédé de traitement tel que décrit précédemment peut être combiné avec le procédé de commande de l'ouverture de sessions tel que décrit dans la demande de brevet publiée sous le numéro WO2011/001096.

Les exemples qui précèdent ne sont que des modes possibles de mise en œuvre de l'invention qui ne s'y limite pas. Notamment, d'autres réseaux que ceux du protocole TCP/IP peuvent être concernés, tels que les réseaux de type ATM. De même, d'autres mécanismes de notification de congestion peuvent être utilisés, tels qu'un mécanisme de notification explicite de congestion vers l'avant FECN, pour « Forward Explicit Congestion Notification », un mécanisme de notification explicite de congestion vers l'arrière BECN, pour « Backward Explicit Congestion Notification » ou bien encore des combinaisons de ces différents mécanismes. Le terme « avant » correspond au sens de transmission d'un paquet, c'est-à-dire vers le destinataire du paquet, et le terme « arrière » correspond au sens opposé de transmission du paquet, c'est-à-dire vers l'émetteur du paquet. Ces différents mécanismes utilisent un champ de l'entête des paquets de données pour porter une information relative à la congestion d'un des nœuds acheminant le paquet.

Sur la figure 1, le dispositif de traitement 100 est représenté en sortie de l'équipement nœud R5 24. Ceci permet de mettre en œuvre le procédé de traitement pour l'ensemble des flux de données, c'est-à-dire les flux de données transmis par le serveur de distribution 40, mis en œuvre par l'opérateur, ainsi que ceux transmis par le serveur de distribution 41, fournissant le service pour un opérateur tiers. Aucune limitation n'est attachée à la localisation de ce dispositif de traitement, ni au nombre de tels dispositifs. Il est par exemple possible de placer un dispositif de traitement 100 en sortie de l'équipement nœud R9 33, si on souhaite appliquer le contrôle d'admission aux flux de données ayant pour source le serveur de distribution 41. Si l'on souhaite limiter la taille de la table des flux 110, il est également possible de positionner un dispositif de traitement 100 dans le réseau d'accès 2 au plus près des entités clientes.

Nous allons maintenant décrire un dispositif de traitement 100 en relation avec la **figure 4****.**

Un tel dispositif 100 comprend :
- un module d'émission/réception 102, agencé pour recevoir et émettre des paquets dans le réseau de communication par paquets ;
- un module de détection d'une congestion 104, agencé pour détecter une congestion associée à un flux de données ;
- un module d'identification 106, agencé pour détecter un premier paquet d'un flux de données et pour déclencher le module de détection d'une congestion 104 ;
- un module de commande 108, agencé pour inhiber la transmission des paquets ultérieurs dudit flux de données, sur détection d'une congestion associée à ce flux de données par les moyens de détection d'une congestion 104.

Le dispositif de traitement 100 comprend en outre la table de flux 110 déjà décrite et une zone mémoire 109 ou file d'attente, agencée pour mémoriser un paquet reçu par le module d'émission/réception 102 avant transmission.

Le module de commande 108 est alors agencé pour supprimer le paquet reçu de la file d'attente 109, cette suppression inhibant la transmission du paquet. Le module de commande 108 est également agencé pour supprimer de la table des flux 110 les flux inactifs, c'est-à-dire les flux de données pour lesquels aucun paquet n'a été reçu depuis une durée supérieure au seuil prédéterminé Tₚ. Le module de commande 108 est également agencé pour associer un état à un flux de données et pour le mémoriser en association avec un identifiant du flux dans la table des flux 110.

Le module de détection d'une congestion 104 est de plus agencé pour mettre à jour le compteur CN représentatif d'une congestion associée à un flux de données, à partir d'une information de congestion portée par un paquet reçu, et pour détecter la congestion associée au flux de données à partir du compteur CN.

Les modules 104, 106, 108 sont agencés pour mettre en œuvre le procédé précédemment décrit. Il s'agit de préférence de modules logiciels comprenant des instructions logicielles pour faire exécuter les étapes du procédé précédemment décrit, mises en œuvre par un dispositif de traitement 100. L'invention concerne donc aussi :
- un programme pour un tel dispositif, comprenant des instructions de code de programme destinées à commander l'exécution des étapes du procédé précédemment décrit, lorsque ledit programme est exécuté par ledit dispositif ;
- un support d'enregistrement lisible par un dispositif sur lequel est enregistré le programme pour un tel dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Le dispositif de traitement 100 peut être un dispositif indépendant tel qu'un collecteur ou bien intégré dans un équipement nœud, tel que le nœud R5.

## Revendications

1. Procédé de traitement d'un flux de données entre un serveur (40, 41) et une entité cliente (10, 11) dans un réseau de communication par paquets, le flux de données étant composé de paquets acheminés par un dispositif de traitement, ledit procédé comprenant les phases suivantes mises en œuvre par le dispositif de traitement :
- une phase d'observation dudit flux de données, déclenchée sur réception d'un premier paquet du flux, au cours de laquelle les paquets dudit flux de données échangés entre le serveur et l'entité cliente et consécutifs au premier paquet sont transmis ;
- une phase de rejet dudit flux de données, déclenchée sur détection, à partir d'au moins un paquet de données dudit flux de données, d'une congestion associée audit flux de données, au cours de laquelle des paquets du flux de données échangés entre le serveur et l'entité cliente et reçus après détection de la congestion ne sont pas transmis.

2. Procédé de traitement selon la revendication 1, dans lequel en l'absence de détection d'une congestion associée audit flux de données pendant la phase d'observation, le flux de données est accepté.

3. Procédé de traitement selon la revendication 1, dans lequel la congestion associée audit flux de données est détectée par une réception d'au moins une information de congestion transportée dans un des paquets du flux de données reçus dans la phase d'observation.

4. Procédé de traitement selon la revendication 1, dans lequel, au moins un autre flux de données étant acheminé par le dispositif de traitement, la phase de rejet est également déclenchée sur détection au cours de la phase d'observation d'une congestion associée audit autre flux de données.

5. Procédé de traitement selon la revendication 3, dans lequel l'information de congestion est portée par un paquet reçu du serveur et à destination de l'entité cliente.

6. Procédé de traitement selon la revendication 3, dans lequel l'information de congestion est portée par un paquet d'acquittement émis par l'entité cliente à destination du serveur.

7. Procédé de traitement selon la revendication 1, dans lequel la phase d'observation est mise en œuvre pour des flux de données de classe de service inférieure à une valeur prédéterminée.

8. Dispositif de traitement (100) d'un flux de données entre un serveur (40, 41) et une entité cliente (10, 11) dans un réseau de communication par paquets, le flux de données étant composé de paquets, comprenant :
- des moyens de transmission (102), agencés pour transmettre un paquet d'un flux de données reçu ;
- des moyens de détection d'une congestion (104), agencés pour détecter, à partir d'au moins un paquet de données d'un flux de données, une congestion associée audit flux de données ;
- des moyens d'identification (106), agencés pour détecter un premier paquet d'un flux de données et pour déclencher les moyens de détection d'une congestion ;
- des moyens de commande (108), agencés pour inhiber la transmission des paquets ultérieurs dudit flux de données par les moyens de transmission, sur détection d'une congestion associée audit flux de données par les moyens de détection d'une congestion.

9. Equipement nœud dans un réseau de communication par paquets, agencé pour acheminer des paquets échangés entre un serveur (40, 41) et une entité cliente (10, 11), et comprenant en outre un dispositif de traitement (100) selon la revendication 8.

10. Programme pour un dispositif de traitement, comprenant des instructions de code de programme destinées à commander l'exécution des étapes du procédé selon la revendication 1, lorsque ledit programme est exécuté par ledit dispositif.

11. Support d'enregistrement lisible par un dispositif de traitement sur lequel est enregistré le programme selon la revendication 10.

## Patentansprüche

1. Verfahren zur Verarbeitung eines Datenstroms zwischen einem Server (40, 41) und einer Client-Einheit (10, 11) in einem Paketkommunikationsnetz, wobei der Datenstrom aus Paketen besteht, die von einer Verarbeitungsvorrichtung geroutet werden, wobei das Verfahren die folgenden Phasen umfasst, die von der Verarbeitungsvorrichtung ausgeführt werden:
- eine Phase der Beobachtung des Datenstroms, die bei Empfang eines ersten Pakets des Stroms ausgelöst wird und während der die Pakete des Datenstroms, die zwischen dem Server und der Client-Einheit ausgetauscht werden und auf das erste Paket folgen, übertragen werden;
- eine Phase der Zurückweisung des Datenstroms, die bei Detektion, anhand wenigstens eines Datenpakets des Datenstroms, einer dem Datenstrom zugeordneten Überlast ausgelöst wird und während der Pakete des Datenstroms, die zwischen dem Server und der Client-Einheit ausgetauscht werden und nach Detektion der Überlast empfangen werden, nicht übertragen werden.

2. Verfahren zur Verarbeitung nach Anspruch 1, wobei bei Nichtvorhandensein einer Detektion einer dem Datenstrom zugeordneten Überlast während der Phase der Beobachtung der Datenstrom angenommen wird.

3. Verfahren zur Verarbeitung nach Anspruch 1, wobei die dem Datenstrom zugeordnete Überlast durch einen Empfang wenigstens einer Überlastinformation detektiert wird, die in einem der Pakete des Datenstroms transportiert wird, die in der Phase der Beobachtung empfangen werden.

4. Verfahren zur Verarbeitung nach Anspruch 1, wobei, wenn wenigstens ein weiterer Datenstrom von der Verarbeitungsvorrichtung geroutet wird, die Phase der Zurückweisung auch bei Detektion, während der Phase der Beobachtung, einer dem weiteren Datenstrom zugeordneten Überlast ausgelöst wird.

5. Verfahren zur Verarbeitung nach Anspruch 3, wobei die Überlastinformation von einem Paket transportiert wird, das vom Server kommend empfangen und an die Client-Einheit gesendet wird.

6. Verfahren zur Verarbeitung nach Anspruch 3, wobei die Überlastinformation von einem Quittierungspaket transportiert wird, das von der Client-Einheit an den Server gesendet wird.

7. Verfahren zur Verarbeitung nach Anspruch 1, wobei die Phase der Beobachtung für Datenströme einer Dienstklasse durchgeführt wird, die niedriger als ein vorbestimmter Wert ist.

8. Vorrichtung zur Verarbeitung (100) eines Datenstroms zwischen einem Server (40, 41) und einer Client-Einheit (10, 11) in einem Paketkommunikationsnetz, wobei der Datenstrom aus Paketen besteht, umfassend:
- Übertragungsmittel (102), die dafür ausgelegt sind, ein Paket eines empfangenen Datenstroms zu übertragen;
- Mittel zur Detektion einer Überlast (104), die dafür ausgelegt sind, anhand wenigstens eines Datenpakets eines Datenstroms eine dem Datenstrom zugeordneten Überlast zu detektieren;
- Identifikationsmittel (106), die dafür ausgelegt sind, ein erstes Paket eines Datenstroms zu detektieren und die Mittel zur Detektion einer Überlast auszulösen;
- Steuerungsmittel (108), die dafür ausgelegt sind, bei Detektion einer dem Datenstrom zugeordneten Überlast durch die Mittel zur Detektion einer Überlast die Übertragung der weiteren Pakete des Datenstroms durch die Übertragungsmittel zu unterbinden.

9. Knoteneinrichtung in einem Paketkommunikationsnetz, welche dafür ausgelegt ist, Pakete zu routen, die zwischen einem Server (40, 41) und einer Client-Einheit (10, 11) ausgetauscht werden, und außerdem eine Verarbeitungsvorrichtung (100) nach Anspruch 8 umfasst.

10. Programm für eine Verarbeitungsvorrichtung, welches Programmcodeanweisungen umfasst, die dazu bestimmt sind, die Ausführung der Schritte des Verfahrens nach Anspruch 1 zu steuern, wenn das Programm von der Vorrichtung ausgeführt wird.

11. Aufzeichnungsmedium, das von einer Verarbeitungsvorrichtung lesbar ist und auf dem das Programm nach Anspruch 10 aufgezeichnet ist.

## Claims

1. Method for processing a data stream between a server (40, 41) and a client entity (10, 11) in a packet communication network, the data stream being composed of packets steered by a processing device, said method comprising the following phases implemented by the processing device:
- a phase of observing said data stream, triggered on receipt of a first packet of the stream, in the course of which the packets of said data stream which are exchanged between the server and the client entity and which follow the first packet are transmitted;
- a phase of rejecting said data stream, triggered on detection, on the basis of at least one data packet of said data stream, of congestion associated with said data stream, in the course of which packets of the data stream which are exchanged between the server and the client entity and are received after detection of the congestion are not transmitted.

2. Processing method according to Claim 1, in which in the absence of detection of congestion associated with said data stream during the observation phase, the data stream is accepted.

3. Processing method according to Claim 1, in which the congestion associated with said data stream is detected by receipt of at least one congestion information item transported in one of the packets of the data stream that are received in the observation phase.

4. Processing method according to Claim 1, in which, at least one other data stream being steered by the processing device, the rejection phase is also triggered on detection in the course of the observation phase of congestion associated with said other data stream.

5. Processing method according to Claim 3, in which the congestion information item is carried by a packet received from the server and destined for the client entity.

6. Processing method according to Claim 3, in which the congestion information item is carried by an acknowledgment packet sent by the client entity destined for the server.

7. Processing method according to Claim 1, in which the observation phase is implemented for data streams of service class lower than a predetermined value.

8. Device for processing (100) a data stream between a server (40, 41) and a client entity (10, 11) in a packet communication network, the data stream being composed of packets, comprising:
- transmission means (102), designed to transmit a packet of a data stream received;
- means for detecting congestion (104), designed to detect, on the basis of at least one data packet of a data stream, congestion associated with said data stream;
- identification means (106), designed to detect a first packet of a data stream and to trigger the means for detecting congestion;
- control means (108), designed to inhibit the transmission of the subsequent packets of said data stream by the transmission means, on detection of congestion associated with said data stream by the means for detecting congestion.

9. Node apparatus in a packet communication network, designed to steer packets exchanged between a server (40, 41) and a client entity (10, 11), and furthermore comprising a processing device (100) according to Claim 8.

10. Program for a processing device, comprising program code instructions intended to control the execution of the steps of the method according to Claim 1, when said program is executed by said device.

11. Recording medium readable by a processing device on which the program according to Claim 10 is recorded.
